# EUROPEAN PATENT APPLICATION

(11) **EP 3 096 530 A1**
(43) Date of publication of application: **23.11.2016**
(21) Application number: 15818150.3
(22) Date of filing: 07.07.2015
(51) Int. Cl.: H04N 21/436, H04N 21/41, H04N 21/414, H04N 21/4363

(54) **DATA PROCESSING METHOD AND APPARATUS AND MOBILE TERMINAL DEVICE**

(30) Priority: 07.07.2014 CN 201410321057
(71) Applicant: LE Holdings (Beijing) Co., Ltd., Beijing 100025 (CN); Le Shi Zhi Xin Electronic Technology (Tianjin) Limited, Beijing 100025 (CN)
(72) Inventor: KAN, Weisheng, Beijing 100025 (CN); LIU, Song, Beijing 100025 (CN)
(74) Representative: Manitz, Finsterwald & Partner GbR
(86) International application number: PCT/CN2015/083477
(87) International publication number: WO 2016/004858

(57) **Abstract**

An embodiment of the present disclosure discloses data processing method and device and mobile terminal equipment. The method is applied to the mobile terminal equipment, which is preset with a WiHD/MHL chip with a transmission function and comprises a first MHL. The method comprises the following steps: intercepting the image data of a display interface when the instruction of sharing the display interface of the mobile terminal equipment to the receiving equipment is received; determining a target transmission protocol needing to be used when presence of the receiving equipment establishing communication connection with the mobile terminal equipment is detected; transmitting image of the display interface to the WiHD/MHL chip which will then modulate image of the display interface; and transmitting the modulated image data to the receiving equipment through the target transmission protocol needing to be used, so as to realize one-screen sharing between the mobile terminal equipment and the receiving equipment. This method realizes higher data transmission rate and transmission quality, and has no-delay, high image quality and more stability in the course of one-screen sharing.

## Description

### FIELD OF TECHNOLOGY

The present disclosure generally relates to data processing technology, in particular to a data processing method and device applied to mobile terminal equipment and mobile terminal equipment.

### BACKGROUND

The popularization of electronic equipment such as smart phones, tablets and smart TV in modem families has brought increasingly more use of one-screen sharing technology. In the existing one-screen sharing technology, first the electronic equipment at sending terminal is connected with the electronic equipment at receiving terminal through a WIFI (Wireless Fidelity) network, and by invoking preset one-screen sharing application (such as AirPlayer, Wireless Display, etc.), multimedia data such as audio, video, picture, etc. selected in the electronic equipment in the sending terminal are compressed and modulated, and are then sent to the electronic equipment at receiving terminal supporting this same one-screen application through the WIFI network. After receiving these multimedia data, the electronic equipment at the receiving terminal decompresses and demodulate them before displaying, to push multimedia documents in the mobile terminal equipment (electronic equipment at the sending terminal) such as mobiles, tablets to large-screen extending playing equipment (electronic equipment at the receiving terminal) such as smart TVs, projectors, etc., and the multimedia documents in mobiles and tablets can be viewed through the large-screen extending playing equipment to get better viewing effect.

However, the above existing one-screen sharing technology at least has following problems that:
First, as the electronic equipment at the sending terminal is connected with the electronic equipment at the receiving terminal through the WIFI network, the data transmission between the electronic equipment at the sending equipment and the electronic equipment at the receiving terminal is prone to be influenced by factors such as band width of and network delay of the WIFI network, resulting in jamming and stopping of the data transmission, leading to undesired effect of one-screen sharing;
Secondly, the processing of multimedia data by the electronic equipment at the sending terminal and the electronic equipment at the receiving terminal includes compressing, modulating, decompressing, demodulating and other steps, which is relatively complex and trivial, influencing synchronization of one-screen display, and further affecting viewing experience of users.

Thus, the user experience of the existing one-screen sharing technology is less than ideal.

### SUMMARY

The technology problem aiming to be solved by the present disclosure is to provide a data processing method and device and mobile terminal equipment. The present disclosure of this method and device in the mobile terminal equipment can solve the problem that the user experience of the existing one-screen sharing technology is less than ideal without WIFI connection, data such as image, audio, etc. in the mobile terminal equipment can be synchronized to receiving equipment through a wireless transmission mode based on a WiHD (Wireless High-Definition) protocol or a wired transmission mode based on a MHL (Mobile High-Definition Link) protocol, achieving higher data transmission rate and quality, more stable transmission, having no-delay, and better and more stable image quality in the course of one-screen sharing to improve user viewing experience.

To achieve the above purposes, a data processing method is provided according to one aspect of the present disclosure. This data processing method is applied to mobile terminal equipment. The mobile terminal equipment is preset with WiHD/MHL chip compatible with a wireless HD WiHD protocol and an MHL protocol and having a transmission function. The mobile terminal equipment includes a first MHL,

The method includes the following steps:
intercepting image data of display interface when the instruction of sharing the display interface of the mobile terminal equipment to the receiving equipment is received;
determining target transmission protocol needing to be used when the receiving equipment is detected to establish communication connection with the mobile terminal equipment, wherein the target transmission protocol is a WiHD protocol or MHL protocol;
transmitting image data of the display interface to a WiHD/MHL chip which will then modulate the image data of the display interface; and
transmitting the modulated image data of the display interface to corresponding receiving equipment through the target transmission protocol needing to be used, so that the receiving equipment displays in a synchronized way according to received data to realize one-screen sharing between the mobile terminal equipment and the receiving equipment.

Preferably, the determining target transmission protocol needing to be used includes the following step:
determining the target transmission protocol needing to be used as the WiHD protocol if a reporting signal of presence of the receiving equipment establishing wireless connection with the mobile terminal equipment through the WiHD protocol, sent by WiHD/MHL chip, is detected; or
determining the target transmission protocol needing to be used as the MHL protocol if a reporting signal of presence of the receiving equipment establishing wired connection through the first MHL, sent by the WiHD/MHL chip, is detected.

Preferably, the determining target transmission protocol needing to be used includes the following steps:
determining the target transmission protocol needing to be used according to a preset priority transmission standard if a reporting signal of presence of the receiving equipment establishing wireless connection with the mobile terminal equipment through the WiHD protocol and a reporting signal of presence of the receiving equipment establishing wired connection with the mobile terminal equipment through the first MHL, sent by WiHD/MHL chip, are detected.

Preferably, intercepting image data of the display interface is specifically: intercepting image data of the display interface in real time from preset cache.

Preferably, the method further includes the following the steps:
determining whether audio data are included in a document corresponding to the display interface;
extracting the audio data from the preset cache if determination result is yes;
transmitting the audio data to the WiHD/MHL chip which will then modulate the audio; and
transmitting the modulated audio data according to the target transmission protocol needing to be used to corresponding receiving equipment, which will then play in a synchronized way according to received audio data.

Preferably, the first MHL interface is a multiplex interface of MHL/USB (Mobile High-Definition/Universal Serial Bus) interface, which includes a detection terminal ID (Identification),

Determining target transmission protocol needing to be used when the presence of the receiving equipment establishing communication connection with the mobile terminal equipment is detected, which includes the following steps:
detecting voltage of the detection terminal ID of the multiplex interface; and
the receiving equipment compatible with the MHL protocol establishing correspondence connection with the mobile terminal equipment through the multiplex interface if the voltage of the detection terminal ID is first predetermined voltage, and determining the target transmission protocol needing to be used as the MHL protocol.

To achieve the above purposes, a data processing device is provided according to another aspect of the present disclosure. The data processing device is applied to the mobile terminal equipment. The mobile terminal equipment is preset with WiHD/MHL chip compatible with the wireless HD WiHD protocol and the MHL protocol and having a transmission function, and the mobile terminal equipment includes the first MHL,

The device includes:
an interception module, configured to intercept image data of the display interface when the instruction of sharing the display interface of the mobile terminal equipment to the receiving equipment is received;
a first determination module, configured to determine the target transmission protocol when the receiving equipment establishing communication connection with the mobile terminal equipment is detected, wherein the target transmission protocol is the WiHD protocol or MHL protocol;
a first transmission module, configured to transmit the image data of the display interface to the WiHD/MHL chip, which will then modulate image data of the display interface;
a second transmission module, configured to transmit the modulated image data of the display interface to corresponding receiving equipment through the target transmission protocol needing to be used, so that the receiving equipment displays in a synchronized way according to received data to realize one-screen display between the mobile terminal equipment and the receiving equipment.

Preferably, the first determination module is configured to:
determine the target transmission protocol needing to be used as the WiHD protocol if a reporting signal of presence of the receiving equipment establishing wireless connection with the mobile terminal equipment through the WiHD protocol, sent by the WiHD/MHL chip, is detected; or
determine the target transmission protocol needing to be used as the MHL protocol if a reporting signal of presence of the receiving equipment establishing wired connection through the first MHL, sent by the WiHD/MHL chip, is detected.

Preferably, the first determination module is configured to:
determine the target transmission protocol needing to be used according to preset priority transmission standard if a reporting signal of presence of the receiving equipment establishing wireless connection with the mobile terminal equipment through the WiHD protocol and a reporting signal of presence of the receiving equipment establishing wired connection with the mobile terminal equipment through the first MHL, sent by WiHD/MHL chip, are detected.

Meanwhile, the present disclosure further provides mobile terminal equipment, which includes: a WiHD/MHL chip compatible with a wireless HD WiHD protocol and an MHL protocol and having a transmission function, a data processor and a first MHL. The WiHD/MHL chip is in communication connection with the data processor;
Wherein the receiving equipment is in communication connection with the mobile terminal equipment through the first MHL or the WiHD protocol, when the mobile terminal equipment receives the instruction of sharing the display interface to the receiving equipment, the interception module in the data processor is used to intercept the image data of the display interface, and then the first transmission module in the data processor transmits the image data of the display interface to the WiHD/MHL chip. When the first determination module in the data processor determines the target transmission protocol needing to be used, the second transmission module in the data processor transmits the image data of the display interface modulated by WiHD/MHL chip to the receiving equipment through the target transmission protocol needing to be used.

A computer readable recording medium on which a program used to implement the method is recorded is provided according to another aspect of the present disclosure.

Compared with the prior art, one of the above technical solutions has following advantages or advantageous effects:
In the data processing method and device and the mobile terminal equipment as provided by this embodiments of the present disclosure, the mobile terminal equipment is preset with the WiHD/MHL chip compatible with the WiHD protocol and the MHL protocol and having the transmission function, to enable the mobile terminal equipment to establish wireless communication connection with the receiving equipment compatible with the WiHD protocol and wired communication connection with the receiving equipment compatible with the MHL protocol, and transmit data such as modulated display interface image, audio, etc. to corresponding receiving equipment through wireless transmission mode based on the WiHD protocol and wired transmission mode based on the MHL protocol, to enable the receiving equipment to display images and play audio in a synchronized way according to received data. Compared with existing data transmission through WIFI connection, it has higher data transmission rate and transmission quality and more stable transmission course, and realizes no-delay, better and more stable image quality in the course of one-screen sharing, thereby improving user viewing experience. Furthermore, the setting of the WiHD/MHL chip can realize sending the data without compressing and other steps after modulating data, further improving data processing rate, thus guaranteeing no-delay in the course of one-screen sharing to improve user viewing experience.

### BRIEF DESCRIPTION OF THE DRAWINGS

FIG. 1 is a flow diagram of embodiment 1 of the data processing method of the present disclosure;
FIG. 2 is a schematic diagram (1) of mobile terminal equipment and receiving equipment in embodiment 1 of the data processing method in the present disclosure;
FIG. 3 is a schematic diagram (2) of mobile terminal equipment and receiving equipment in embodiment 1 of the data processing method in the present disclosure;
FIG. 4 is a structural schematic diagram of embodiment 1 of data processing method in the present disclosure;
FIG. 5 is a structural schematic diagram of embodiment 1 of mobile terminal equipment in the present disclosure.

### DESCRIPTION OF THE EMBODIMENTS

To make the above purposes, characteristics and advantages in the present disclosure more understandable, the following is detailed description of the present disclosure with reference to figures and embodiments.

First, the present disclosure and the involved concepts are briefly explained.

WirelessHD (WiHD) technology is a high speed wireless technology expected much by users, which is mainly in that it can achieve higher data transmission rate with initial transmission rate as high as 4Gbps by using spectrum of 60GHz frequency band (millimeter wave), thereby providing frequency band necessary for transmitting high-quality and high-definition non-compressed video more reliably.

Mobile high-definition link (MHL) is a video standard interface connecting a portable consumption electronic device, and MHL can present on HD TV through standard HDMI by only one signal cable. It uses existing Micro USB interface, enabling mobile phone, digital camera, digital video camera and portable multimedia player to directly transmit complete media contents to TVs without affecting high resolution of video.

In this embodiment, the mobile terminal equipment can include mobiles, tablets, etc. The receiving equipment can include large screen extending playback equipment, such as smart TV, projector, etc.

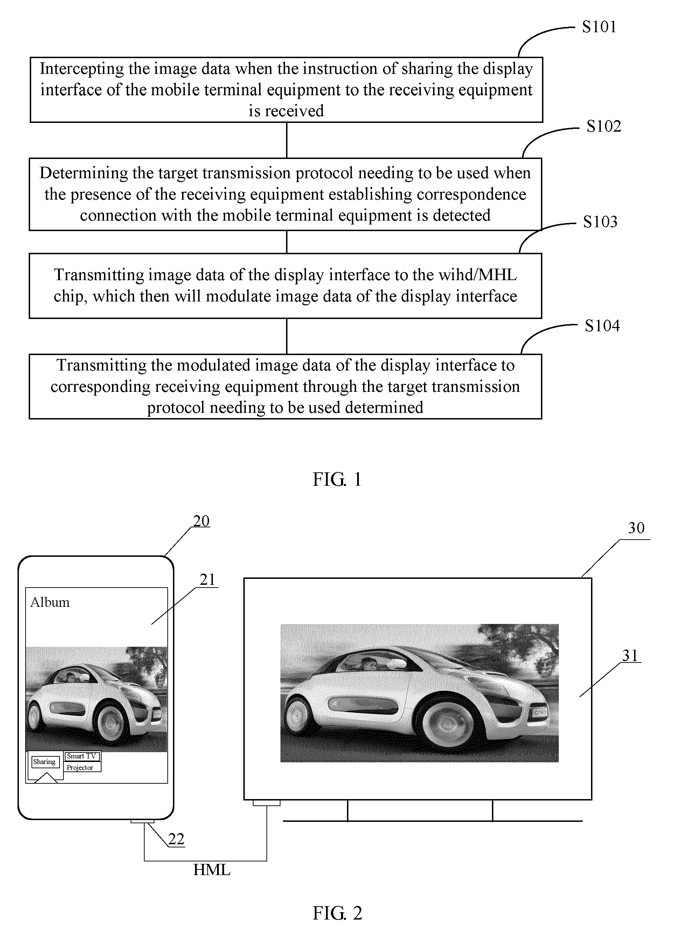

FIG. 1 shows a flow schematic diagram of embodiment 1 of data processing method in the present disclosure.

The data processing method is applied to the mobile terminal equipment. The mobile terminal equipment can be preset with the WiHD/MHL chip compatible with the wireless HD protocol (WiHD protocol) and the mobile terminal high definition link protocol (MHL protocol) and having the transmission function, and the mobile terminal equipment has the first MHL.

In this embodiment, this method includes the following steps:
S101, intercepting the image data when the instruction of sharing the display interface of the mobile terminal equipment to the receiving equipment is received.

In this embodiment, the mobile terminal equipment can be a smart phone with the WiHD/MHL chip, while the receiving equipment can be a smart TV compatible with the WiHD protocol and the MHL protocol.

Wherein when the instruction of sharing the display interface of the mobile terminal equipment to the receiving equipment is received, for example, when users want to share the display interface of the mobile phone to the smart TV for viewing, they can start the preset one-screen sharing application in mobile phone and trigger preset buttons related to one-screen sharing on this application interface.

As the display interface of the mobile terminal equipment can be a static interface (such as home page after turning on, viewing a photo in preset album application, etc.) or a dynamic interface (such as interface of playing video, audio and game, etc.), the step of determining whether the display interface is a static interface can be included after the instruction of sharing the display interface of the mobile terminal equipment to the receiving equipment is received.

To determine whether the display interface is a static interface can be performed according to property (such as name) of the present disclosure corresponded to the current display interface. For example, when the current display interface is a photo, the present disclosure corresponding to this photo is "Album", and the display interface can be determined as a static interface according to the property of the album. Another example: when the current display interface is playing audio documents, the present disclosure corresponding to this audio document is "TTPOD Music", and then the user can know the display interface is determined as a dynamic interface according to the property of "TTPOD Music".

If determination result is yes, i.e., the display interface of the mobile terminal equipment is a static interface, then it is only needed to intercept image data of the display interface from preset cache for one time, i.e., just obtaining image data of the current interface, to reduce waste of memory resources as far as possible.

If determination result is no, i.e., the display interface of the mobile terminal equipment is a dynamic interface, it is needed to intercept image data of the display interface from preset cache in real time by frequency such as 60 frames/s or 30 frames/s every time, to display the image on the display interface of the mobile terminal equipment to the receiving terminal of the multimedia equipment in a synchronized way more precisely.

S102, determining the target transmission protocol needing to be used when the presence of the receiving equipment establishing correspondence connection with the mobile terminal equipment is detected, wherein this target transmission protocol is the WiHD protocol or the MHL protocol.

In this embodiment, the receiving equipment establishing communication connection with the mobile terminal equipment being detected can be determined by receiving the reporting signal of presence of the receiving equipment establishing communication connection with the mobile terminal equipment, sent by WiHD/MHL chip. Specifically, the presence of the receiving equipment establishing communication connection with the mobile terminal equipment can be determined when the signal of presence of the receiving equipment establishing wireless communication connection with the mobile terminal equipment through the WiHD protocol and/or signal of presence of the receiving equipment establishing wired communication connection with the mobile terminal equipment through the first MHL, sent by the WiHD/MHL, are received.

It is needed to further determine target transmission protocol needing to be used after it is determined of presence of receiving equipment establishing communication connection with mobile terminal equipment, so as to transmit the data to corresponding receiving equipment through figured out target transmission protocol needing to be used.

Specifically, the target transmission protocol needing to be used is determined as the WiHD protocol if a reporting signal of presence of the receiving equipment establishing wireless connection with the mobile terminal equipment through the WiHD protocol, sent by WiHD/MHL chip, is detected; and the target transmission protocol needing to be used is determined as the MHL protocol if a reporting signal of presence of the receiving equipment establishing wired connection with the mobile terminal equipment through the first MHL protocol is detected.

Preferably, the target transmission protocol needing to be used can be determined according to preset priority transmission standard if a reporting signal of presence of the receiving equipment establishing wireless connection with the mobile terminal equipment through the WiHD protocol and a reporting signal of presence of the receiving equipment establishing wired connection with the mobile terminal equipment through the first MHL, sent by WiHD/MHL chip, are detected. This preset priority transmission standard can be set according to different design demands. For example, this preset priority transmission standard in this embodiment is: the WiHD protocol takes the priority to be used for data transmission by default in presence of concurrently receiving equipment establishing wireless communication connection with the mobile terminal equipment through the WiHD protocol and the receiving equipment establishing wired communication connection with the mobile terminal equipment through the first MHL.

Preferably, the first MHL can be the MHL with a single function, or a multiplex interface of the MHL/USB interface.

The target transmission protocol can be determined by following ways when the first MHL is the multiplex interface of the MHL/USB interface;
detecting the voltage of the detection terminal ID of the multiplex interface, if the voltage of the detection terminal ID is a first preset voltage value, it is determined of presence of receiving equipment compatible with MHL protocol establishing communication connection with the mobile terminal equipment through the multiplex interface. At this moment, this multiplex interface is used as the MHL, and the target transmission protocol needing to be used is determined as the MHL protocol, wherein this first preset voltage value can be ground voltage value for grounding of detection terminal ID through grounding resistance of 1K (Kilo ohm); and
if the voltage of the detection terminal ID is second preset voltage value or third preset voltage value, it is determined of presence of OTG (On-The-Go) equipment establishing communication connection with the mobile terminal equipment through this multiplex interface. At this moment, this multiplex interface is used as a USB interface, wherein when the OTG equipment is used as a host, the detection terminal ID of its connection wire is directly grounded, and the detection terminal ID detected at this moment is second predetermined voltage value. When the OTG equipment is used as slave, the detection terminal ID of its connection wire is suspended or grounded through R2 (R2>100K), and pulled upward through equipment interior, and the detection terminal ID detected at this moment is third predetermined voltage value.

S103, transmitting image data of the display interface to the WiHD/MHL chip, which then will modulate image data of the display interface.

S104, transmitting the modulated image data of the display interface to corresponding receiving equipment through the target transmission protocol needing to be used determined in S102, so that the receiving equipment modulates demodulated image data of the display interface, and displays in a synchronized way according to the demodulated image data of the display interface, to realize one-screen sharing between the mobile terminal equipment and the receiving equipment.

Preferably, when the mobile terminal equipment is playing audio documents and video documents, the sound can be played through the mobile terminal equipment, the audio data in audio documents and video documents can be extracted in real time, and can be transmitted through the determined target transmission protocol to the receiving equipment, which will then play in a synchronized way, to further improve user listening experience.

Based on this, after the above determination that the display interface of the mobile terminal equipment being dynamic interface, whether the document corresponding to this display interface includes audio data can be further determined, and by finding the document corresponding to the display interface in the present disclosure corresponding to the display interface determined in the above steps, whether this document includes audio data is determined.

For example, when the current display interface is playing video, the present disclosure corresponding to this video is "Sohu Video". This video document is found in preset cache corresponding to the "Sohu Video", and this video document includes audio data can be determined. This video document can be extracted from preset cache in real time; then the extracted audio data is transmitted to the WiHD/MHL chip which then will modulate the audio data; then modulated audio data is transmitted to corresponding receiving equipment through the target transmission protocol needing to be used, so that the receiving equipment plays in a synchronized way according to received audio data, further realizing sharing the image and audio in the mobile terminal equipment to the receiving equipment.

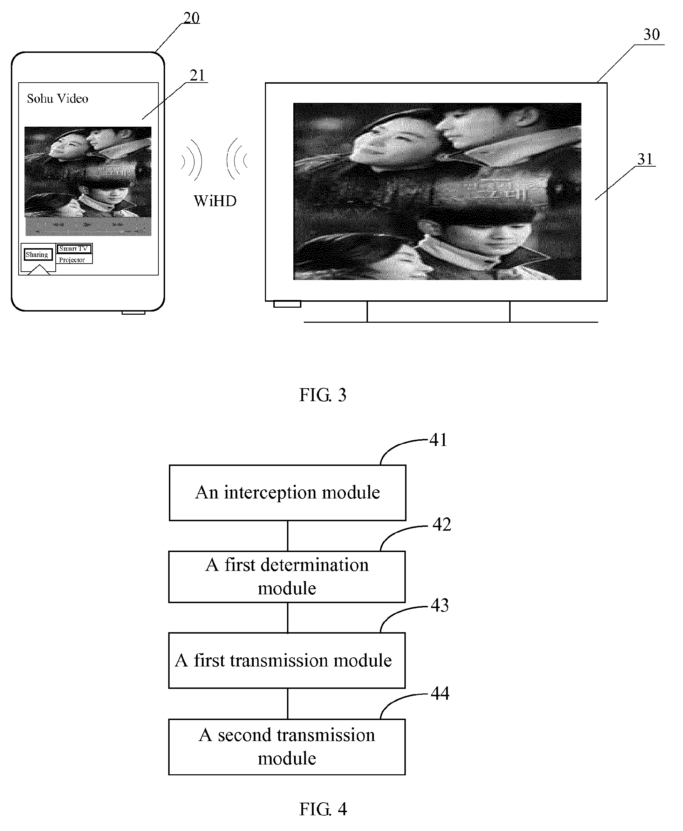

Figures 2 and 3 are schematic diagram (1) and (2) of the mobile terminal equipment and the receiving equipment in embodiment 1 of the data processing method in the present disclosure. The following is further description of the above steps taking the example in which the mobile terminal equipment is smart phone while receiving equipment is smart TV, with reference to Figures 2 and 3.

### Example 1 (see FIG. 2):

When wanting to view one photo in a mobile phone 20 and then share the photo to a smart TV at home, the users can start preset one-screen sharing application in the mobile phone 20, then find and trigger "share" at the preset position on the present disclosure interface, and finally select sharing target, i.e. "smart TV", wherein this mobile phone includes the multiplex interface 22 of an MHL/USB interface.

After the mobile phone receives the above operations, the user can determine whether a display interface 21 of the mobile phone is a static interface or a dynamic interface, which can be known from the property of the present disclosure (e.g., the name is "Album") corresponding to this viewed photo interface. The display interface at this moment is a static interface, and then it is only needed to intercept image data of the display interface from preset cache corresponding to the album for one time.

If a reporting signal of a receiving equipment 30 compatible with an MHL protocol establishing communication connection with a mobile terminal equipment through MHL protocol, sent by a WiHD/MHL chip, is received, it can be determined of presence of the receiving equipment 30 establishing communication connection with the mobile terminal equipment 20 through the multiplex interface 22.

Detect the voltage of the detection terminal ID of the multiplex interface 22, it is known that the voltage of this detection terminal ID is first predetermined voltage according to the detection result. Thus, the receiving equipment 30 can be determined as compatible with the MHL protocol, and then the target transmission protocol needing to be used is determined as the MHL protocol.

Transmit the image data of the display interface to the WiHD/MHL chip, which will then modulate the image data of the display interface.

Transmit the modulated image data of the display interface to the receiving equipment 30 through the MHL protocol, so that receiving equipment 30 modulates received image data of the display interface, and displays in a synchronized way on the smart TV interface 31 according to the demodulated image data of the display interface, to realize one-screen sharing between the mobile terminal equipment 20 and the receiving equipment 30.

### Example 2 (see FIG. 3):

When wanting to view one video document in the mobile phone 20 and share this video document to a smart TV at home, the users can start one-screen application preset in the mobile phone 30, then find and trigger "Share" in preset position on the interface, and finally select sharing to a "Smart TV".

After the phone mobile receives the above operations, whether the display interface 21 is a static interface or dynamic interface can be determined first. As the present disclosure corresponding to the interface of viewed video is "Sohu Video", it is known that the display interface in viewing video is a dynamic interface according to the property of "Sohu Video", and it is needed to intercept image data of the display interface from the cache corresponding to the Sohu video in real time.

Find the document (e.g., the third episode of Star Love) corresponding to this display interface in the present disclosure (Sohu Video) corresponding to the display interface in the above step, this document includes audio data can be determined, and the audio data will then be extracted in real time.

If a reporting signal of presence of a receiving equipment compatible with a WiHD protocol establishing wireless communication connection with a mobile terminal equipment through a WiHD protocol, sent by the WiHD/MHL chip, is received, it is determined of presence of the receiving equipment 30 establishing wireless communication connection with the mobile terminal equipment 20, and whereby it can be determined that the target transmission protocol needing to be used can be determined as the WiHD protocol.

Transmit the image data and audio data of the display interface to the WiHD/MHL chip, which will then modulate the image data and audio data of the display interface.

Transmit the modulated image data and audio data of the display interface to the receiving equipment 30 through the WiHD protocol, so that the receiving equipment 30 demodulates the received image data and audio data of the display interface, and displays and plays in a synchronized way on a smart TV interface 31 according to the demodulated image data of the display interface, to realize one-screen sharing between the mobile terminal equipment 20 and the receiving equipment 30.

In the data processing method as provided in the embodiment of the present disclosure, the mobile terminal equipment is preset with the WiHD/MHL chip compatible with the WiHD protocol and the MHL protocol and having the transmission function, to enable the mobile terminal equipment establish wireless communication connection with the receiving equipment compatible with the WiHD protocol and wired communication connection with the receiving equipment compatible with the MHL protocol, and transmit modulated data such as image and audio of the display interface to corresponding receiving equipment through the wireless transmission mode based on the WiHD protocol or wired transmission mode based on the MHL protocol, to make the receiving equipment displays image and plays audio in a synchronized way according to received data. Compared with the existing data transmission through Wi-Fi, this method has higher transmission rate and quality, and more stable transmission, guarantees no-delay, and high and stable image quality in the course of one-screen sharing, thereby improving user viewing experience. Furthermore, the setting of WiHD/MHL chip can realize sending the data without compressing and other steps after modulating data, further improving data processing rate, thus guaranteeing no-delay in the course of one-screen sharing to improve user viewing experience.

The following is a description of the data processing device provided in the present disclosure corresponding to the above data processing method.

FIG. 4 is a structural schematic diagram of embodiment 1 of data processing device in the present disclosure.

This data processing method is applied to the mobile terminal equipment. The mobile terminal equipment can be preset with the WiHD/MHL chip compatible with the wireless HD protocol (WiHD protocol) and the mobile high definition link protocol (MHL protocol) and having the transmission function, and the mobile terminal equipment has the first MHL.

In this embodiment, this device includes:
an interception module 41, configured to intercept image data of the display interface when the instruction of sharing the display interface of the mobile terminal equipment to the receiving equipment is received;
a first determination module 42, configured to determine the target transmission protocol needing to be used when presence of the receiving equipment establishing communication connection with the mobile terminal equipment is detected,
wherein the target transmission protocol is a WiHD protocol or an MHL protocol.
a first transmission module 43, configured to transmit image data of the display interface to the WiHD/MHL chip, which will then modulate the image data of the display interface.
a second transmission module 44, configured to transmit the modulated image data of the display interface to corresponding equipment through the target transmission protocol needing to be used, so that the receiving equipment displays in a synchronized way according to received data, to realize one-screen sharing between the mobile terminal equipment and the receiving equipment.

Preferably, the first determination module 42 can be configured to: determine that target transmission protocol needing to be used is the WiHD protocol if a reporting signal of presence of receiving equipment establishing wireless connection with mobile terminal equipment through WiHD protocol, sent by the WiHD/MHL chip, is detected; or determine the target transmission protocol needing to be used is the MHL protocol if a reporting signal sent of presence of the receiving equipment establishing wired connection with the mobile terminal equipment through first MHL, by the WiHD/MHL chip, is detected;

The first determination module 42 can be configured to: determine the target transmission protocol needing to be used according to preset priority transmission standard if a reporting signal of presence of the receiving equipment establishing wireless connection with the mobile terminal equipment through the WiHD protocol and a reporting signal of presence of receiving equipment establishing wired connection with mobile terminal equipment through the first MHL, sent by the WiHD/MHL chip, are detected.

Preferably, this device further includes a second determination module configured to: determine whether display interface is a static interface.

If the determination result of the second determination module is yes, then the interception module 41 can be configured to intercept the image data of the display interface from preset cache for one time.

If the determination result of the second determination module is no, then the interception module 41 can be configured to intercept the image data of the display interface from preset cache in real time.

Preferably, this device further includes:
a third determination module, configured to determine whether the document corresponding to the display interface includes audio data when the determination result of the second determination module is no.
an extraction module, configured to extract audio data from preset cache in real time when the determination result of the third determination module is yes.
a third transmission module, configured to transmit audio data to the WiHD/MHL chip, which will then modulate audio.
a fourth transmission module, configured to transmit the modulated audio data to corresponding receiving equipment according to the target transmission protocol needing to be used, so that the receiving equipment plays in a synchronized way according to the received audio data.

Preferably, this first MHL is a multiplex interface of an MHL/USB interface, which includes a detection terminal ID.

This first determination module can be configured to: determine the target transmission protocol is the MHL protocol if it is determined of presence of the receiving equipment compatible with the MHL protocol establishing communication connection with the mobile terminal equipment through the multiplex interface when the voltage of detection terminal ID is first predetermined voltage; and determine presence of OTG equipment establishing communication connection with the mobile terminal equipment through the multiplex interface if the voltage of the detection terminal ID is the second or third predetermined voltage value, and at this moment, this multiplex interface is used as a USB interface.

In the data processing device as provided in the embodiment of the present disclosure, the mobile terminal equipment is preset with the WiHD/MHL chip compatible with the WiHD protocol and the MHL protocol and having the transmission function, to enable the mobile terminal equipment establish wireless communication connection with the receiving equipment compatible with the WiHD protocol and wired communication connection with the receiving equipment compatible with the MHL protocol, and transmit modulated data such as image and audio of the display interface to corresponding receiving equipment through the wireless transmission mode based on the WiHD protocol or wired transmission mode based on the MHL protocol, to make the receiving equipment display image and play audio in a synchronized way according to received data. Compared with existing data transmission through WIFI, this method has higher transmission rate and quality, and more stable transmission, guarantees no-delay, and high and stable image quality in the course of one-screen sharing, thereby improving user viewing experience. Furthermore, the setting of WiHD/MHL chip can realize sending the data without compressing and other steps after modulating data, further improving data processing rate, thus guaranteeing no-delay in the course of one-screen sharing to improve user viewing experience.

The following is a description of the mobile terminal equipment provided by the present disclosure corresponding to the above data processing method and data processing device.

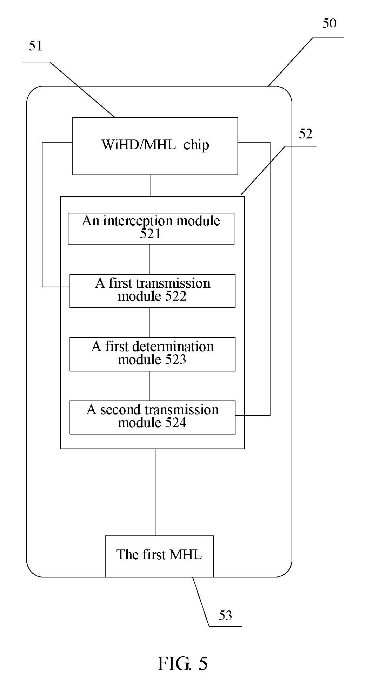

FIG. 5 shows a structural schematic diagram of embodiment 1 of mobile terminal equipment in the present disclosure.

In this embodiment, the mobile terminal equipment can be a mobile phone, PAD, etc.

This mobile terminal equipment 50 includes: an WiHD/MHL chip 51 compatible with a wireless HD WiHD protocol and a mobile high definition link MHL protocol and having a transmission function, a data processor 52 and a first MHL 53, and the WiHD/MHL chip 51 is in communication connection with the data processor 52. The data processor 52 is in communication connection with the first MHL 53.

Wherein the receiving equipment is in communication connection with the mobile terminal equipment 50 through the first MHL53 or the WiHD protocol. When the mobile terminal equipment 50 receives the instruction of sharing the display interface to the receiving equipment, the image data of the display interface is intercepted through the interception module 521 in the data processor 52, and is transmitted to the WiHD/MHL chip 51 by the first transmission module 522 in the data processor 52. When the first determination module 523 in the data processor 52 determines the target transmission protocol needing to be used, the second transmission module 524 in the data processor 52 transmits the image data of the display interface modulated by the WiHD/MHL chip 51 to the receiving equipment through the target transmission protocol needing to be used (the first MHL 53 in this embodiment,).

The mobile terminal equipment as provided in the embodiment of the present disclosure is preset with the WiHD/MHL chip compatible with WiHD protocol and the MHL protocol and having a transmission function, a first MHL and a data processor, to enable the mobile terminal equipment to establish wireless communication connection with the receiving equipment compatible with the WiHD protocol and establish wired communication connection with the receiving equipment compatible with the MHL protocol, and transmit the modulated data such as image and audio of the display interface to corresponding receiving equipment through wireless transmission mode based on the WiHD protocol or wireless transmission mode based on the MHL protocol, to make the receiving equipment display image and play audio in a synchronized way according to received data. Compared with existing data transmission through the WIFI, this method has higher transmission rate and quality, and more stable transmission, guarantees no-delay, and high and stable image quality in the course of one-screen sharing, thereby improving user viewing experience. Furthermore, the setting of WiHD/MHL chip can realize sending the data without compressing and other steps after modulating data, further improving data processing rate, thus guaranteeing no-delay in the course of one-screen sharing to improve user viewing experience. Each embodiment in this specification is described in a progressive way, and focuses on differences from other embodiment. For the similar parts between embodiments, the contents in each embodiment can be referred to mutually.

For the embodiments of the device and equipment, the description is simple as they are basically similar to the embodiments of the method, and the related parts can be referred to the partial description of the embodiments of the method.

It will be understood by the person of ordinary skill in the art that: all or part of steps to realize the embodiment of the above method embodiments can be completed through hardware related to program instruction. The program described previously can be stored in a computer readable storage medium. Execution includes steps of the embodiments of the above method when the program is being executed; and while the storage media described previously include: media capable of storing program codes such as ROM, RAM, diskette or disk, etc.

It is to be appreciated that: the above embodiments are only used to describe technical solution of the present disclosure, rather than to limit it. Although the present disclosure is described in detail with reference to the embodiments described previously, the ordinary skilled personnel in this art should understand that: they can still modify the technical solution recorded in the embodiments described previously, or make equal substitution for part or all technical characteristics, without making the nature of corresponding technical solution out of scope of technical solution of embodiments in the present disclosure.

## Claims

1. A data processing method, wherein the data processing method is applied to mobile terminal equipment which is preset with a WiHD/MHL chip compatible with a wireless HD WiHD protocol and a mobile high-definition link (MHL) protocol and having a transmission function, and the mobile terminal equipment comprises a first MHL.
the method comprises:
intercepting the image data of a display interface when the instruction of sharing the display interface of the mobile terminal equipment to the receiving equipment is received;
determining a target transmission protocol needing to be used when presence of the receiving equipment establishing communication connection with the mobile terminal equipment is detected, wherein the target transmission protocol is a WiHD protocol or an MHL protocol;
transmitting the image data of the display interface to the WiHD/MHL chip which will then modulate the image data of the display interface; and
transmitting the modulated image data of the display interface to corresponding receiving equipment through the target transmission protocol needing to be used, to make the receiving equipment display in synchronized way according to received data to realize one-screen sharing between the mobile terminal equipment and the receiving equipment.

2. The data processing method according to claim 1, wherein the determining target transmission protocol needing to be used comprises the following steps:
determining the target transmission protocol needing to be used as the WiHD protocol if a reporting signal of presence of the receiving equipment establishing wireless connection with the mobile terminal equipment through the WiHD protocol, sent by the WiHD/MHL chip, is detected; or
determining Target transmission protocol needing to be used as the MHL protocol if a reporting signal of presence of the receiving equipment establishing wired connection through the first MHL, sent by the WiHD/MHL chip, is detected.

3. The data processing method according to claim 1, wherein the determining target transmission protocol needing to be used comprises the following steps:
determining target transmission protocol needing to be used according to preset priority transmission standard if a reporting signal of presence of the receiving equipment establishing wireless connection with the mobile terminal equipment through the WiHD protocol and a reporting signal of presence of the receiving equipment establishing wired connection with the mobile terminal equipment through the first MHL, sent by the WiHD/MHL chip, are detected.

4. The data processing method according to claim 1, wherein intercepting the image data of the display interface is specifically:
intercepting the image data of the display interface from preset cache in real time.

5. The data processing method according to claim 4, wherein the method further comprises the following steps:
determining whether audio data are comprised in the document corresponding to the display interface;
extracting the audio data from preset cache if the determination result is yes;
transmitting the audio data to the WiHD/MHL chip which will then modulate the audio; and
transmitting the modulated audio data according to the target transmission protocol needing to be used to corresponding receiving equipment which will then play in a synchronized way according to the received audio data.

6. The data processing method according to claim 1, wherein the first MHL interface is the multiplex interface of an MHL/USB interface, which comprises a detection terminal ID,
determining the target transmission protocol needing to be used when presence of receiving equipment establishing communication connection with mobile terminal equipment is detected, which comprises the following steps:
detecting the voltage of the detection terminal ID of the multiplex interface;
the receiving equipment compatible with the MHL protocol establishing communication connection with the mobile terminal equipment through the multiplex interface if the voltage of the detection terminal ID is first predetermined voltage, and determining the target transmission protocol needing to be used as the MHL protocol.

7. A data processing device, wherein the data processing device is applied in mobile terminal equipment, the mobile terminal equipment is preset with the WiHD/MHL chip compatible with the wireless HD WiHD protocol and the mobile high definition link MHL protocol and having the transmission function, and the mobile terminal equipment comprises a first MHL,
the device comprises:
an interception module, configured to intercept the image data of the display interface when the instruction of sharing the display interface of the mobile terminal equipment to the receiving equipment is received;
a first determination module, configured to determine the target transmission protocol when presence of the receiving equipment establishing communication connection with the mobile terminal equipment is detected, wherein the target transmission protocol is a WiHD protocol or an MHL protocol;
a first transmission module, configured to transmit the image data of the display interface to the WiHD/MHL chip which will then modulate the image data of the display interface; and
a second transmission module, configured to transmit the modulated image data of the display interface to corresponding receiving equipment through the target transmission module needing to be used, to make the receiving equipment display in a synchronized way according to the received data, to realize one-screen display between the mobile terminal equipment and the receiving equipment.

8. The data processing device according to claim 7, wherein the first determination module is configured to:
determine the target transmission protocol needing to be used as the WiHD protocol if a reporting signal of presence of the receiving equipment establishing wireless connection with the mobile terminal equipment through the WiHD protocol, sent by the WiHD/MHL chip, is detected; or
determine the target transmission protocol needing to be used as the MHL protocol if a reporting signal of presence of the receiving equipment establishing wired connection with the mobile terminal equipment through the first MHL, sent by the WiHD/MHL chip, is detected.

9. The data processing device according to claim 8, wherein the first determination module is configured to:
determine the target transmission protocol needing to be used according to preset priority transmission standard if a reporting signal of presence of the receiving equipment establishing wireless connection with the mobile terminal equipment through the WiHD protocol and a reporting signal of presence of the receiving equipment establishing wired connection with the mobile terminal equipment through the first MHL, sent by the WiHD/MHL chip, are detected.

10. Mobile terminal equipment, wherein the mobile terminal equipment comprises:
a WiHD/MHL chip compatible with a wireless HD WiHD protocol and a mobile high definition link MHL protocol and having a transmission function, a data processor and a first MHL. The WiHD/MHL chip is in communication connection with the data processor;
wherein the receiving equipment is in communication connection with the mobile terminal equipment through the first MHL or the WiHD protocol. When the mobile terminal equipment receives the instruction of sharing the display interface to the receiving equipment, the interception module in the data processor is used to intercept the image data of the display interface, and then the first transmission module in data processor transmits the image data of the display interface to the WiHD/MHL chip, when the first determination module in the data processor determines the target transmission protocol needing to be used, the second transmission module in the data processor transmits the image data of the display interface modulated by the WiHD/MHL chip to the receiving equipment through the target transmission protocol needing to be used.

11. A computer readable recording medium on which a program used to implement the method in claim 1 is recorded.
